# EUROPEAN PATENT APPLICATION

(11) **EP 0 522 495 A1**
(43) Date of publication of application: **13.01.1993**
(21) Application number: 92111481.5
(22) Date of filing: 07.07.1992
(51) Int. Cl.: A01B 61/04

(54) **A mouldboard assembly for a plough**

(30) Priority: 08.07.1991 US 726962
(71) Applicant: LONG MANUFACTURING N.C. INC., Tarboro, North Carolina 27886 (US)
(72) Inventor: Furlough, Thomas D., Tarboro, NC 27886 (US)
(74) Representative: Frankland, Nigel Howard

(57) **Abstract**

A mouldboard support (14) is pivotally hinged to its carrier (10) and has a medial rearward portion pivotally connected to a lower link (46), the upper portion of the link (46) having an arcuate ramp (50) with a portion engaging a detent mounted in an upper link (36) that is pivotally connected to the lower link (46) at its lower end portion and to the carrier (10) at its upper end. The support (14) and two links (36,46) form a toggle in which the pivot pin (38) connecting the two links (36,46) is normally slightly rearward of a line connecting their upper and lower pivot pins (34,48) and that permits the support (14) to pivot rearwardly and upwardly when an obstruction is met and to return by gravity when the carrier (10)is raised. The operating angular position of the support (14) may be changed by shifting the pivot pin (34) for the upper link (36).

## Description

THIS INVENTION relates to a mouldboard assembly for a plough, and more particularly to an assembly which trips when an obstruction or excessive resistance to movement of the blade is encountered in order to avoid damage to the plough structure.

Various kinds of plough trip mechanisms have been used heretofore. One type has employed a toggle linkage and a heavy spring which biases the toggle toward the closed operating position. Such arrangements employ a spring viewed as sufficiently strong to return the plough to its operating position as soon as the obstruction is passed. An example is shown in US-A-2,565,668, and US-A-3,976,144. US-A-4,609,051 discloses a similar mechanism which incorporates "spring plus gravity" return. Another type has the links in an off-centre relationship so that when an obstruction is encountered the centre linkage passes through dead centre. A spring is provided to tend to urge the links in the off-centre relationship. Examples are US-A-3,910,354 and US-A-4,312,407.

US-A-2,863,372, discloses a spring-biased detent which engages a slide member and normally holds the plough in ploughing position but which permits it to lift to the rear when an obstruction is encountered.

US-A-4,128,130, discloses a biased four-bar linkage which permits the tool to pass over obstacles that are encountered but which restores the tool to earth penetrating position after it has been tripped.

US-A-3,972,374, discloses a linkage mechanism including a biased linkage mechanism spring and a pivot riding in an enlarged opening tending to hold the links extended, the arrangement permitting tripping of the plough after which the operator raises the main frame in order to permit the weight of the apparatus to return the linkage to normal position.

According to this invention there is provided a mouldboard assembly for a plough having longitudinal carrier means, the assembly comprising support means supporting a mouldboard having a blade with a lower edge and mounted on said carrier means by a main support pivot, linkage means connecting the carrier means, and a point on the support means between the pivot and the lower edge of the blade, said linkage means including a lower link having its lower end connected by a first pivot to the said point, an upper link pivotally connected by a second pivot to the carrier means rearwardly of the first pivot and a third pivot connecting the upper link to said lower link, detent means carried by one link co-operating with detent engaging means carried by the other link, said detent engaging means being so positioned that when the upper and lower links are at an angle slightly less than 180°, said third pivot lies outwardly of a line connecting the first and second pivots, said detent means then being engaged by said engaging means; said detent means being disengaged from said engaging means when said mouldboard encounters a greater than predetermined resistance in its forward movement to permit said mouldboard to pivot rearwardly as said upper and lower links move from an extended to a smaller angular relationship, and whereby, after the plough moves past the resistance the carrier means may be lifted to raise the mouldboard blade above the earth to permit the mouldboard to drop by gravity to its operative position.

Preferably a tension spring is mounted between the support means and one of the pivots connecting the links to assist in the initial re-setting movement of the support means.

Preferably the detent is mounted on the lower portion of the upper link, and the detent engaging means are carried on the lower link.

Conveniently said lower link has an upper part with an extended ramp portion, and said detent rides as over the ramp portion of said lower link to permit said mouldboard to pivot rearwardly.

Preferably means resiliently urge said detent means against the detent engaging means.

Conveniently means are provided for adjusting the position of said second pivot to change the angle of the mouldboard.

In order that the invention may be more readily understood, and so that further features thereof may be appreciated the invention will now be described by way of example with reference to the accompanying drawings in which
FIGURE 1 is a side elevation of three mouldboard assemblies on a carrier beam, the central plough shank being in tripped position;
FIGURE 2 is a rear elevation of one of the mouldboard assemblies as shown in Figure 1,
FIGURES 3-3 and 4-4 are enlarged sections on the lines 3-3 and 4-4 of Figure 2, illustrating the upper and lower links, and
Figures 5-5 and 6-6 are enlarged sections on the lines 5-5 and 6-6 of Figure 1.

With further reference to the drawings, a longitudinal carrier beam or support member 10 is illustrated. The longitudinal beam 10 is adapted to be connected to a three point hitch which may be raised and lowered by suitable means associated with a conventional tractor, not shown.

At spaced longitudinal intervals the carrier beam 10 has a series of mouldboards 12 which are mounted on depending elongate support means or shanks 14 which are braced by gussets 17 and which are pivotally mounted on support brackets 15 which are carried by the carrier beam. Each support bracket 15 has spaced side members 16 that are connected by struts. The upper edge of each bracket 15 has a ledge 19 on each side that receives fastening members 20 that extend through plates 21 that span the top of the beam 10 in order to support the bracket.

Each bracket has a forward lower portion carrying a pin 24 that provides a fixed pivot for the upper end of the mouldboard support 14.

At its upper rearward portion each bracket 15 has a series of openings 30, 31 and 32 which provide selective supports for a pin 34 that carries the upper end of an upper paired link 36 of a toggle linkage. The upper link 36 receives a pivot pin 38 in its lower portion and rigidly carries a laterally extending tube 39 which contains a compression spring 40, spaced below the pin 38. The inner end of the compression spring engages a ball support 41 for a ball 42 that is slidable in the tube 39. The compressive tension on the spring 40 may be adjusted by a cap 44 that is threadedly engaged with the outer end of the tube 39, and also by a shim 45 which is located between the cap and the spring. The pivot pin 38 connects the upper link 36 to a lower paired link 46 having a lower end mounted by a pin 48 in a knee portion 49 located at a position adjacent the mid point of the support 14.

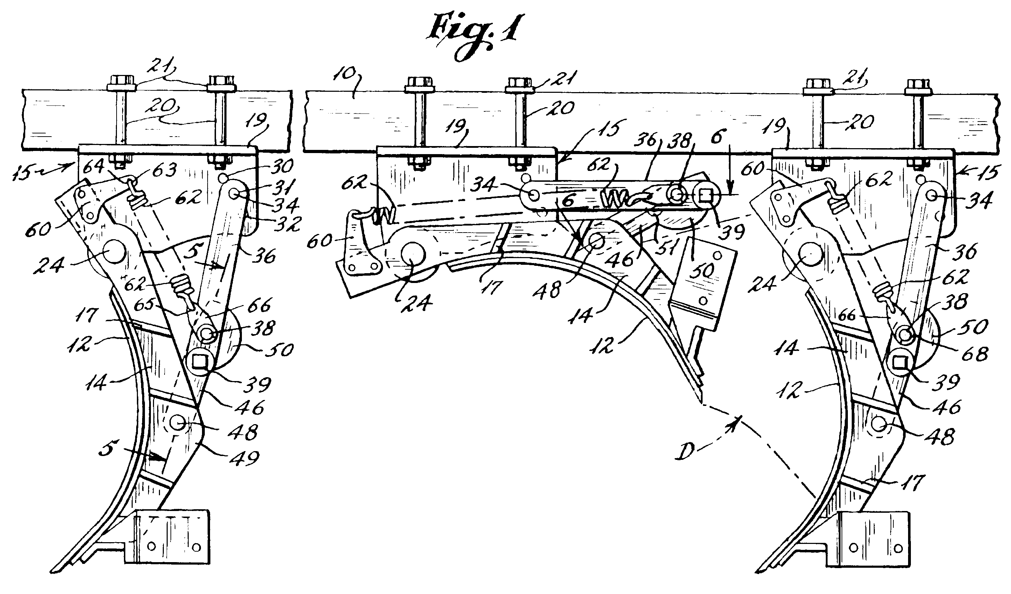

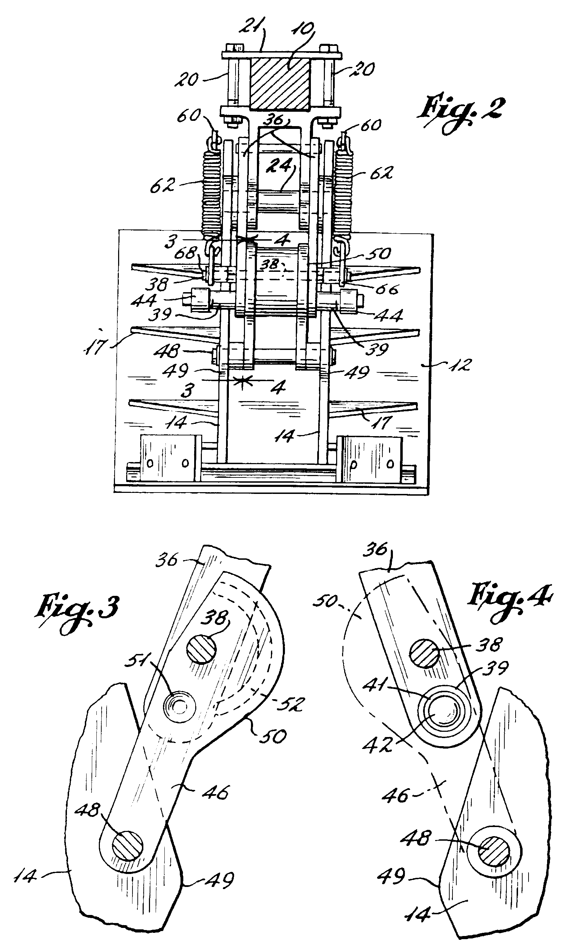

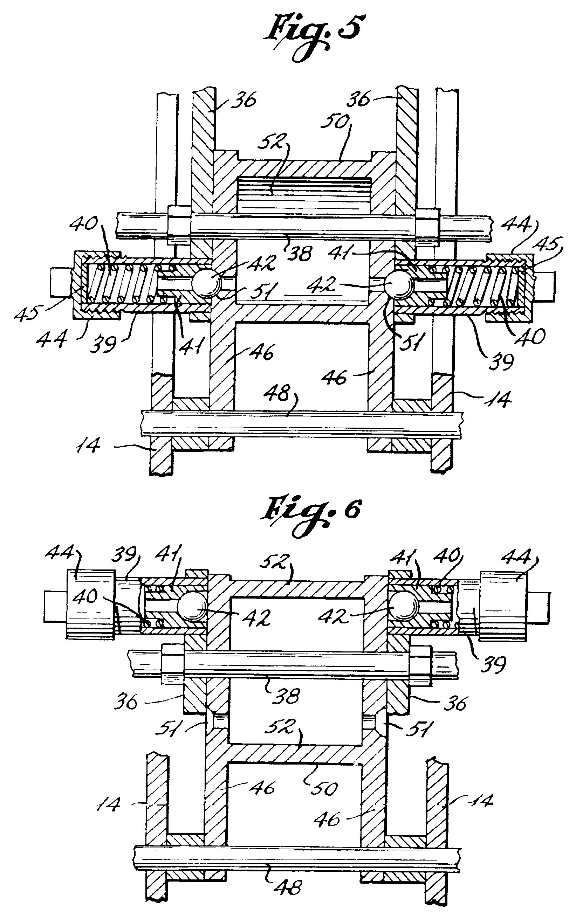

The lower link 46 has an upper portion forming an extended area termed ramp portion 50 that receives the pivot pin 38. The ramp portion 50 has a slot or depression 51 which receives the ball 42 that is carried by the upper link 36 when the mechanism is in the initial condition of Figure 1. The ramp portion 50 is of arcuate nature in order that when the ball is disengaged from the slot 51 when the mechanism moves from the Figure 1 condition, it will engage the extended area of the ramp portion 50. The ball 42 forms a detent and the slot or depression 51 is a detent engaging means. The two side ramp portions 50 are connected by a bridge 52, as shown in Figures 2, 5 and 6.

The position of the fixed pivots 24 and 34 and the effective length of the support 14 and of the upper and lower links 36 and 46 and the position of the pivot pin 38 are such that in the lower-most extended position, as indicated in Figure 1, the links 36 and 46 are approximately 5° from extending in a straight line. The links are retained in this position by the engagement of the ball 42 in slot or depression 51. Thus, no stop means is required to prevent the mechanism from moving across centre in the opposite direction.

The upper and lower links are thus at an angle slightly less than 180°. The pivot pin 38 lies outwardly or rearwardly of a line connecting the pivots 34 and 48.

In the operation of the device the substantial alignment of the upper and lower links 36 and 46 permits the use of a relatively small force such as that provided by the ball 42 engaging the slot or depression 51 in the lower link in order to maintain the mouldboard in its operative position. When an obstruction or an unusual resistance is encountered the ball 42 rides out of the slot or depression 51 and onto the outer surface of the ramp portion 50 of the lower link. The links move outwardly to a position, as indicated with the central ploughshare in Figure 1 and 6, in which the mouldboard is elevated above the surface of the earth. Since there is no resistance to the upward movement of the mouldboard other than the force of gravity, (after the roller 42 has become disengaged from the slot or depression 51) it is moved upwards easily and tends to float over the earth. After the obstruction is passed, the operator merely raises the three point hitch which carries the carrier beam 10 in order to permit the mouldboard to return by gravity to its customary operating position. Since nearly all of the assembly is positioned rearwardly of the pivot pin 24, when the assembly is raised to pass over an obstacle its centre of gravity is rearward of the pivot so that it tends to return to its former position.

In the event that the operator desires to change the angle of the mouldboard with respect to the earth he may do this by shifting the pin 34 between any of the openings 30, 31 or 32.

The use of the spring pressed ball acting as a detent avoids the necessity for the use of a heavy coil spring as is frequently used, thus providing a relatively simple and inexpensive arrangement of parts. Furthermore, the detent arrangement provides for an easily set and maintained trip that is responsive to a predetermined impacting force on the ploughshare, to swing easily to a raised position, and then to return to its lower position.

However, in some types of soil, especially clay, a clump of dirt D may tend to become packed between a raised ploughshare and the ext rearward ploughshare as indicated in Figure 1. This may impede or prevent the gravity return of the raised ploughshare to its normal operating position. In order to overcome this occasional problem, in the illustrated embodiment a reset spring is provided to assist the ploughshare in breaking away from any materials that become packed between adjacent ploughs.

The reset spring assembly includes a paired arm 60 mounted at the upper end of the support shank 14 above the pivot pin 24. The arm extends outwardly from a line passing through the axes of pins 24 and 38 in order to provide a lever arm around pin 24 for the resetting function. A spring 62 has an upper end 63 connected to the outer end 64 of arm 60. The other end 65 of the spring is connected to a link 66 having an opening to receive the outer end of the pin 38. A conventional C clip 68 may be used to retain the link 66 on the pin 38.

When the ploughshare is tripped to an upper position as indicated centrally in Figure 1, the spring 62 is placed under tension and pulls on the arm 60, thereby assisting in initial breaking away of the ploughshare from the impacted materials in order that the built-in gravity return may restore the ploughshare to operating position.

## Claims

1. A mouldboard assembly for a plough having longitudinal carrier means, the assembly comprising support means supporting a mouldboard having a blade with a lower edge and mounted on said carrier means by a main support pivot, linkage means connecting the carrier means, and a point on the support means between the pivot and the lower edge of the blade, said linkage means including a lower link having its lower end connected by a first pivot to the said point, an upper link pivotally connected by a second pivot to the carrier means rearwardly of the first pivot and a third pivot connecting the upper link to said lower link, detent means carried by one link co-operating with detent engaging means carried by the other link, said detent engaging means being so positioned that when the upper and lower links are at an angle slightly less than 180°, said third pivot lies outwardly of a line connecting the first and second pivots, said detent means then being engaged by said engaging means; said detent means being disengaged from said engaging means when said mouldboard encounters a greater than predetermined resistance in its forward movement to permit said mouldboard to pivot rearwardly as said upper and lower links move from an extended to a smaller angular relationship, and whereby, after the plough moves past the resistance the carrier means may be lifted to raise the mouldboard blade above the earth to permit the mouldboard to drop by gravity to its operative position.

2. An assembly according to Claim 1 wherein the detent is mounted on the lower portion of the upper link, and the detent engaging means are carried on the lower link.

3. An assembly according to Claim 2 wherein said lower link has an upper part with an extended ramp portion, and said detent rides over the ramp portion of said lower link to permit said mouldboard to pivot rearwardly.

4. An assembly according to any one of the preceding Claims wherein means resiliently urge said detent means against the detent engaging means.

5. An assembly according to any one of the preceding Claims comprising means for adjusting the position of said second pivot to change the angle of the mouldboard.

6. An assembly according to any one of the preceding Claims wherein said detent means is a ball and said detent engaging means is a depression.

7. An assembly according to any one of the preceding Claims wherein a tension spring is mounted between the support means and one of the pivots connecting the links to assist in the initial re-setting movement of the support means.

8. An assembly according to any one of Claims 1 to 6, wherein said support means has an outwardly extending arm above the main support pivot, and tension means extending between the arm and said linkage means, said tension means assisting in the initial return of said mouldboard from a raised to a lower position.

9. An assembly according to Claim 8, wherein the tension means is connected to the linkage means at the third pivot.

10. An assembly according to Claim 8 or 9, wherein the tension means is a coil spring.
